# EUROPEAN PATENT APPLICATION

(11) **EP 3 086 215 A1**
(43) Date of publication of application: **26.10.2016**
(21) Application number: 14795456.4
(22) Date of filing: 11.06.2014
(51) Int. Cl.: G06F 3/0488

(54) **TERMINAL STATE SWITCHING METHOD AND APPARATUS**

(30) Priority: 20.12.2013 CN 201310719391
(71) Applicant: ZTE Corporation, Shenzhen, Guangdong 518057 (CN)
(72) Inventor: HAO, Zhijian, Shenzhen Guangdong 518057 (CN); TONG, Xiangjie, Shenzhen Guangdong 518057 (CN)
(74) Representative: Novagraaf Technologies
(86) International application number: PCT/CN2014/079693
(87) International publication number: WO 2014/180439

(57) **Abstract**

A method and device for switching a state of a terminal are provided. The method includes that: a touch signal from a touch screen is acquired, a touch area corresponding to the touch signal is determined according to the touch signal, and the state of the terminal is switched according to the touch signal under a condition that the touch area exceeds a set threshold value, wherein the state of the terminal is a standby state or a wakeup state. The problem of inconvenience in terminal state switching of a user with an entity key is solved, switching of the state of the terminal with the touch screen is achieved, and a user experience is improved.

## Description

### Technical Field

The present disclosure relates to the field of communication, and in particular to a method and device for switching a state of a terminal.

### Background

At present, a touch screen is a transparent medium attached to a surface of a display, and as a human-computer interaction interface of popular mobile equipment, has been favored by more and more consumers and more and more applied to various kinds of mobile terminal equipment.

In a related technology, mobile terminal equipment generally has two kinds of states, i.e., standby (sleep) and wakeup. At present, a terminal is triggered to enter a standby state or a wakeup state usually by a press on an entity key. This kind of key is usually protruded from a housing of a terminal, which may cause influence on attractive appearance of the whole terminal and a possibility of accidentally waking up the terminal or accidentally putting the terminal into a standby state after accidental touch. In addition, there exists a gap between the key and the housing of the terminal, so that the terminal may not have good waterproof and antistatic effects.

For the problem of inconvenience in terminal state switching of a user with an entity key in the related technology, there is yet no effective solution.

### Summary

The embodiments of the present disclosure provide a method and device for switching a state of a terminal, so as to at least solve the problem of inconvenience in terminal state switching of a user with an entity key.

According to one aspect of the embodiments of the present disclosure, a method for switching a state of a terminal is provided, which may include that: a touch signal from a touch screen is acquired; a touch area corresponding to the touch signal is determined according to the touch signal; and the state of the terminal is switched according to the touch signal under a condition that the touch area exceeds a set threshold value, wherein the state of the terminal may be a standby state or a wakeup state.

In an exemplary embodiment, the step that the touch area corresponding to the touch signal is determined according to the touch signal may include that: the touch area is determined according to the number of intersections of which capacitance variations exceed a configured threshold value among transverse and vertical line electrode intersections on the touch screen.

In an exemplary embodiment, the step that the state of the terminal is switched according to the touch signal under the condition that the touch area exceeds the set threshold value may include that: a timer is started under the condition that the touch area is detected to exceed the set threshold value, and the state of the terminal is switched when the touch area corresponding to the touch signal keeps exceeding the set threshold value for a first preset time length.

In an exemplary embodiment, the step that the state of the terminal is switched according to the touch signal under the condition that the touch area exceeds the set threshold value may include that: a timer is started under the condition that the touch area is detected to exceed the set threshold value, and the state of the terminal is switched when the touch area corresponding to the touch signal keeps exceeding the set threshold value for a first preset time length and a touch action corresponding to the touch signal stops within a second preset time length after the first preset time length.

In an exemplary embodiment, the method may further include that: sensitivity and/or scanning frequency of the touch screen is set according to the state of the terminal, wherein a value of sensitivity and/or scanning frequency of the terminal in the standby state may be lower than a value of sensitivity and/or scanning frequency of the terminal in the wakeup state.

According to another aspect of the embodiments of the present disclosure, a device for switching a state of a terminal is further provided, which may include: an acquisition component, configured to acquire a touch signal from a touch screen; a determination component, configured to determine a touch area corresponding to the touch signal according to the touch signal; and a switching component, configured to switch the state of the terminal according to the touch signal under a condition that the touch area exceeds a set threshold value, wherein the state of the terminal may be a standby state or a wakeup state.

In an exemplary embodiment, the determination component may be configured to determine the touch area according to the number of intersections of which capacitance variations exceed a configured threshold value among transverse and vertical line electrode intersections on the touch screen.

In an exemplary embodiment, the switching component may be configured to start a timer under the condition that the touch area is detected to exceed the set threshold value, and switch the state of the terminal when the touch area corresponding to the touch signal keeps exceeding the set threshold value for a first preset time length.

In an exemplary embodiment, the switching component may be configured to start a timer under a condition that the touch area is detected to exceed the set threshold value, and switch the state of the terminal when the touch area corresponding to the touch signal keeps exceeding the set threshold value for a first preset time length and a touch action corresponding to the touch signal stops within a second preset time length after the first preset time length.

In an exemplary embodiment, the device may further include: a setting component, configured to set sensitivity and/or scanning frequency of the touch screen according to the state of the terminal, wherein a value of sensitivity and/or scanning frequency of the terminal in the standby state may be lower than a value of sensitivity and/or scanning frequency of the terminal in the wakeup state.

According to the embodiments of the present disclosure, a touch signal is acquired from a touch screen, a touch area corresponding to the touch signal is determined according to the touch signal, and the state of the terminal is switched according to the touch signal under a condition that the touch area exceeds the set threshold value, wherein the state of the terminal is a standby state or a wakeup state. Therefore, the problem of inconvenience in terminal state switching of the user with the entity key is solved, switching of the state of the terminal with the touch screen is achieved, and a user experience is improved.

### Brief Description of the Drawings

The drawings described here are adopted to provide further understanding of the embodiments of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for switching a state of a terminal according to an embodiment of the present disclosure;
Fig. 2 is a first structure diagram of a device for switching a state of a terminal according to an embodiment of the present disclosure;
Fig. 3 is a second structure diagram of a device for switching a state of a terminal according to an embodiment of the present disclosure;
Fig. 4 is a flowchart of switching of a mobile terminal between a standby state and a wakeup state according to an exemplary embodiment of the present disclosure;
Fig. 5 is a structure diagram of touch screen mobile terminal equipment according to an exemplary embodiment of the present disclosure;
Fig. 6 is a diagram of a touch manner for switching of a mobile terminal between standby and wakeup states according to an exemplary embodiment of the present disclosure; and
Fig. 7 is a flowchart of a touch manner for switching of a mobile terminal between standby and wakeup states according to an exemplary embodiment of the present disclosure.

### Detailed Description of the Embodiments

It is important to note that embodiments in the present disclosure and characteristics in the embodiments may be combined under a condition of no conflicts. The present disclosure will be described below with reference to the drawings and the embodiments in detail.

In the following embodiment, a terminal may be a mobile terminal (for example, a mobile phone or a tablet), and may also be a terminal of another type. An operating system running on the terminal may also be systems of various types, for example, an android system which is widely used at present, or a Windows operating system and an iOS, and is not limited to these systems.

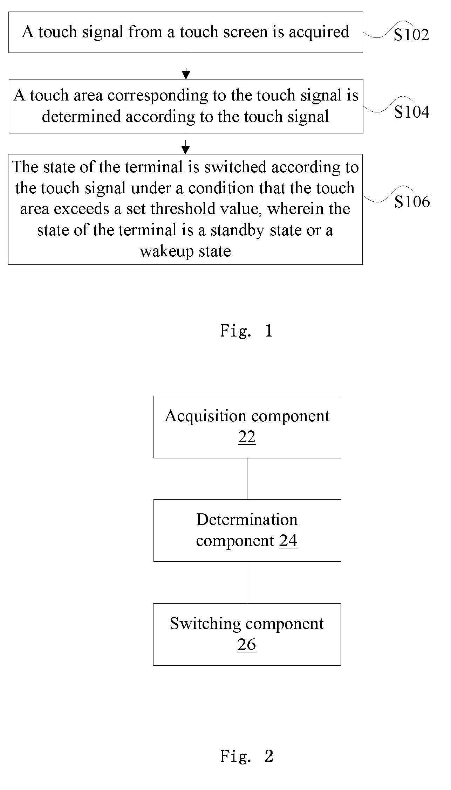

In an embodiment, a method for switching a state of a terminal is provided. Fig. 1 is a flowchart of a method for switching a state of a terminal according to an embodiment of the present disclosure. As shown in Fig. 1, the flow includes the following steps:
Step S102: a touch signal from a touch screen is acquired;
Step S104: a touch area corresponding to the touch signal is determined according to the touch signal; and
Step S106: the state of the terminal is switched according to the touch signal under a condition that the touch area exceeds a set threshold value, wherein the state of the terminal is a standby state or a wakeup state.

By the steps, the terminal is not required to switch the state of the terminal with an entity key any more, and instead, a touch signal is acquired from the touch screen, a corresponding touch area is determined according to the touch signal, and the state of the terminal is switched according to a size of the touch area, wherein the state of the terminal may be a standby state or a wakeup state. Therefore, the problem of inconvenience in terminal state switching of a user with the entity key is solved, switching of the state of the terminal with the touch screen is achieved, and a user experience is improved.

In the embodiment, multiple manners many be adopted for determining the touch area according to the touch signal. For example, the touch area may be determined according to the number of intersections of which capacitance variations exceed a configured threshold value among transverse and vertical line electrode intersections on the touch screen.

In the embodiment, whether to switch the state of the terminal or not may be judged independently through one touch signal, and the state of the terminal may also be judged according to the touch signal in combination with another assistant manner, thereby improving terminal state switching accuracy. In an exemplary embodiment, a timer may be started under the condition that the touch area is detected to exceed the set threshold value, and the state of the terminal is switched when the touch area corresponding to the touch signal keeps exceeding the set threshold value for a first preset time length. In order to achieve higher terminal state switching accuracy, the timer may also be started under the condition that the touch area is detected to exceed the set threshold value, and the state of the terminal is switched when the touch area corresponding to the touch signal keeps exceeding the set threshold value for a first preset time length and a touch action corresponding to the touch signal stops within a second preset time length after the first preset time length, so that terminal state switching caused by long-time mistaken touch of the user on the touch screen is prevented, and the user experience is improved.

In the embodiment, sensitivity and/or scanning frequency of the touch screen may be set according to the state of the terminal, wherein a value of sensitivity and/or scanning frequency of the terminal in the standby state is lower than a value of sensitivity and/or scanning frequency of the terminal in the wakeup state, so that power consumption of the terminal is reduced on the premise of no influence on sensitive acquisition of the touch signal from the touch screen.

In the embodiment, a device for switching a state of a terminal is further provided, which is configured to implement the abovementioned method, and what has been described in the abovementioned embodiment and exemplary implementation mode will not be elaborated herein. It is important to note that the names of components in the following device do not form practical limits to the components. For example, an acquisition component may be described as "a component configured to acquire a touch signal from a touch screen". The following components may all be implemented in a processor, and for example, an acquisition component may be described as "a processor, configured to acquire a touch signal from a touch screen", or, "a processor, including an acquisition component", or the like. Fig. 2 is a first structure diagram of a device for switching a state of a terminal according to an embodiment of the present disclosure. As shown in Fig. 2, the device includes: an acquisition component 22, a determination component 24 and a switching component 26. The device will be described below.

The acquisition component 22 is configured to acquire a touch signal from a touch screen;
the determination component 24 is configured to determine a touch area corresponding to the touch signal according to the touch signal; and
the switching component 26 is configured to switch the state of the terminal according to the touch signal under a condition that the touch area exceeds a set threshold value, wherein the state of the terminal is a standby state or a wakeup state.

By the abovementioned device, the terminal is not required to switch the state of the terminal with an entity key any more, and instead, a touch signal is acquired from the touch screen, a corresponding touch area is determined according to the touch signal, and the state of the terminal is switched according to a size of the touch area, wherein the state of the terminal may be a standby state or a wakeup state. Therefore, the problem of inconvenience in terminal state switching of a user with the entity key is solved, switching of the state of the terminal with the touch screen is achieved, and a user experience is improved.

In the embodiment, the determination component 24 may further be configured to determine the touch area according to the number of intersections of which capacitance variations exceed a configured threshold value among transverse and vertical line electrode intersections on the touch screen.

In addition, the switching component 26 may further be configured to start a timer under the condition that the touch area is detected to exceed the set threshold value, and switch the state of the terminal when the touch area corresponding to the touch signal keeps exceeding the set threshold value for a first preset time length.

The switching component 26 may further be configured to start a timer under the condition that the touch area is detected to exceed the set threshold value, and switch the state of the terminal when the touch area corresponding to the touch signal keeps exceeding the set threshold value for a first preset time length and a touch action corresponding to the touch signal stops within a second preset time length after the first preset time length.

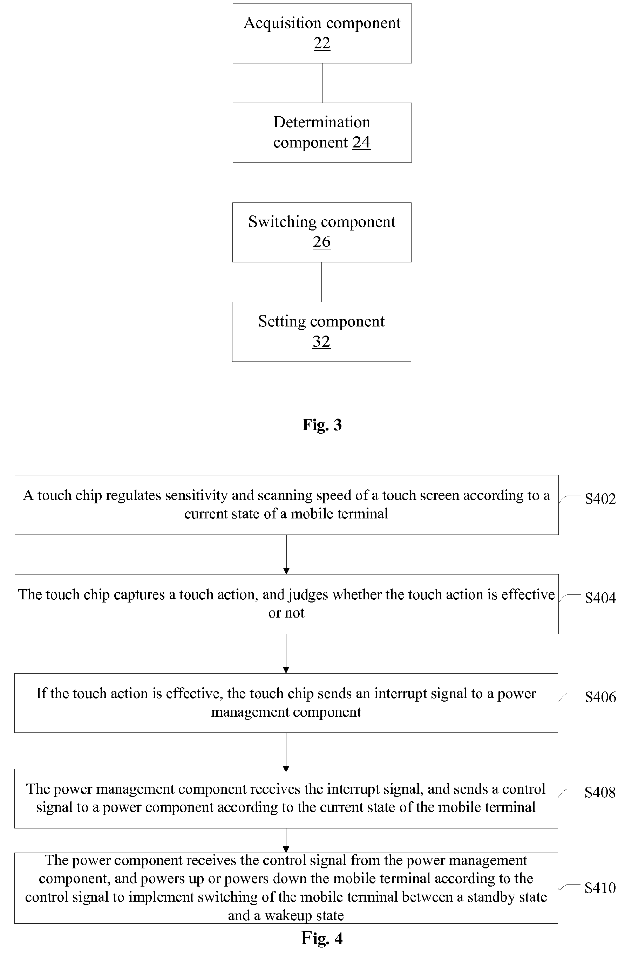

Fig. 3 is a second structure diagram of a device for switching a state of a terminal according to an embodiment of the present disclosure. As shown in Fig. 3, the device may include: an acquisition component 22, a determination component 24, a switching component 26 and a setting component 32, wherein functions of the acquisition component 22, the determination component 24 and the switching component 26 are the same as those of the acquisition component 22, determination component 24 and switching component 26 in Fig. 2, and will not be described here. The function of the setting component 32 will be described below.

The setting component 32 is configured to set sensitivity and/or scanning frequency of the touch screen according to the state of the terminal, wherein a value of sensitivity and/or scanning frequency of the terminal in the standby state is lower than a value of sensitivity and/or scanning frequency of the terminal in the wakeup state.

The present disclosure will be described below with reference to exemplary embodiments and exemplary implementation modes.

### Exemplary embodiment 1

The exemplary embodiment provides a touch manner for switching of a mobile terminal between a standby state and a wakeup state. Fig. 4 is a flowchart of switching of a mobile terminal between a standby state and a wakeup state according to an exemplary embodiment of the present disclosure. As shown in Fig. 4, the flowchart includes the following steps.

Step S402: a touch chip regulates sensitivity and scanning speed of a touch screen according to a current state of a mobile terminal. For example, in the standby state, the sensitivity of the touch screen is reduced and scanning is performed at a scanning speed lower than that in an idle state (a low-power consumption state in which the touch screen is woken up but there is no finger touch) of the touch screen, and in the wakeup state, the sensitivity and scanning speed are regulated into normal sensitivity and scanning speed.

Step S404: the touch chip captures a touch action, and judges whether the touch action is effective or not.

Step S406: the touch chip sends an interrupt signal to a power management component if the touch action is effective.

Step S408: the power management component receives the interrupt signal, and sends a control signal to a power component according to the current state of the mobile terminal.

Step S410: the power component receives the control signal from the power management component, and powers up or powers down the mobile terminal according to the control signal to implement switching of the mobile terminal between the standby state and the wakeup state.

By the steps, switching of the terminal between the standby state and the wakeup state can be implemented without arranging an entity key on the mobile terminal with the touch screen, a requirement of a user can be better satisfied, and a user experience is improved. Not only may attractive appearance of the mobile terminal be improved, but also better waterproof and antistatic effects of the terminal may be achieved.

### Exemplary embodiment 2

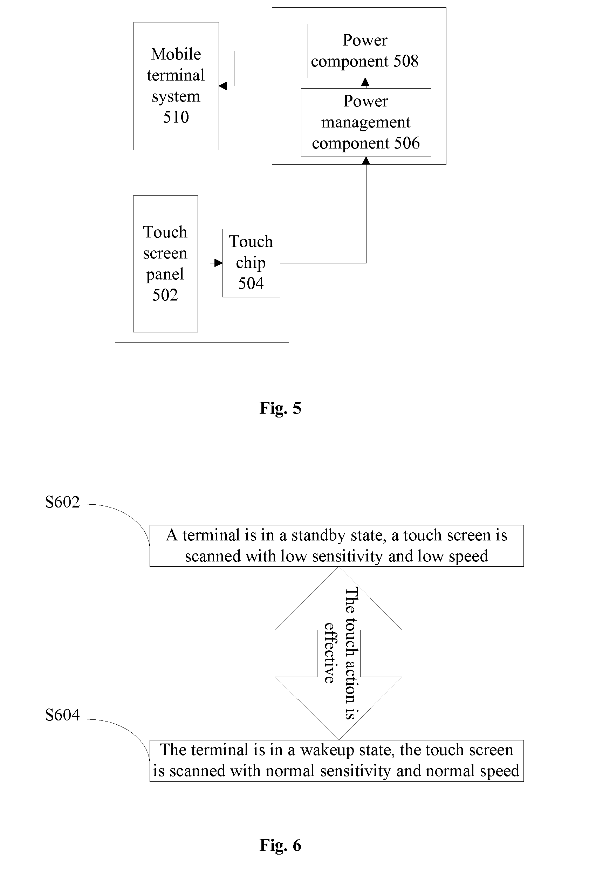

Fig. 5 is a structure diagram of touch screen mobile terminal equipment according to an exemplary embodiment of the present disclosure. As shown in Fig. 5, the mobile terminal equipment includes: a touch screen panel 502, a touch chip 504, a power management component 506, a power component 508 and a mobile terminal system 510.

The touch screen panel 502 can induce a conductor such as a finger after being started, and a pin of the touch chip 504 is connected with the power management component.

The touch chip 504 is configured to control/scan the touch screen panel, calculate information such an area of a touch action, trigger an interrupt signal and send the signal to the power management component through the pin connected with the power management component.

The power management component 506 is configured to give a response to the interrupt signal of the touch chip, and send a standby/wakeup control signal to the power component according to a current system state.

The power component 508 is configured to implement power-up and power-down operation over the system in response to the control signal sent by the power management component.

The mobile terminal system 510 is configured to implement switching of a terminal between standby and wakeup states in response to the power-up and power-down operation of the power component.

By the equipment, switching of the mobile terminal between the standby state and the wakeup state is controlled by a size of the touch area, so that shortcomings of triggering of a standby state or a wakeup state of the terminal with an entity key in the related technology are overcome, and a user experience is improved.

Fig. 6 is a diagram of a touch manner for switching of a mobile terminal between standby and wakeup states according to an exemplary embodiment of the present disclosure. As shown in Fig. 6, the diagram includes the following steps.

Step S602: when the mobile terminal is in the standby state, sensitivity of a touch screen is reduced to prevent occurrence of mistaken touch, and in addition, there is no influence on capturing of an effective touch action because a touch signal exceeding a certain area may be strong. Since a touch action exceeding a certain area is effective only if the touch action exists all the time within a certain preset time, capturing of the effective touch action will not be influenced by low-frequency scanning, and a scanning frequency of the touch screen is reduced to effectively reduce standby power consumption of the terminal. After the effective touch action is captured, the mobile terminal will enter the wakeup state.

Step S604: when the terminal is in the wakeup state, the sensitivity and scanning speed of the touch screen are both normal values, and the mobile terminal will enter the standby state only after an effective touch action is captured.

In the exemplary embodiment, the sensitivity and scanning speed of the touch screen are correspondingly set according to the state of the terminal, so that power consumption of the terminal is reduced on the premise of ensuring sensitive touch action capturing.

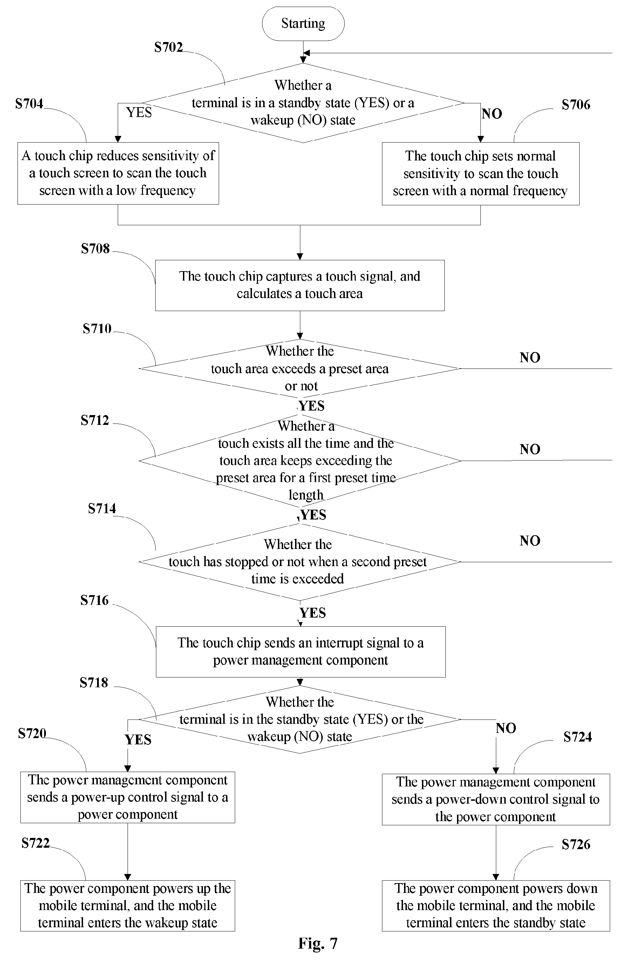

Fig. 7 is a flowchart of a touch manner for switching of a mobile terminal between standby and wakeup states according to an exemplary embodiment of the present disclosure. As shown in Fig. 7, the flowchart includes the following steps.

Step S702: whether a current state of the mobile terminal is the standby state or the wakeup state is judged.

Step S704: in the standby state, a touch chip reduces sensitivity of a touch screen to prevent a mistaken triggering condition. There is no influence on capturing of an effective touch action because a touch signal exceeding a certain area may be strong. The touch screen is scanned at a low frequency, the low frequency referring to a scanning frequency lower than that in an idle mode (a low-power consumption mode in which there is no finger touch in the wakeup state) of the touch screen, so that standby power consumption of the terminal is effectively reduced. Since a touch action exceeding a certain area may be effective only if the touch action exists all the time within a certain preset time, capturing of the effective touch action will not be influenced by low-frequency scanning.

Step S706: in the wakeup state, the touch chip sets sensitivity and scanning speed of the touch screen into normal values.

Step S708: the touch chip calculates a touch area when capturing a touch signal.

In the embodiment, the touch area is obtained in an indirect manner. Transverse and vertical induction lines on the whole touch screen are uniformly distributed, and a size of the corresponding touch area may be obtained according to the number of transverse and vertical induction line electrode intersections of which capacitance variations exceed a threshold value P. As long as the number of the electrode intersections of which the capacitance variations exceed the threshold value P caused by a finger touch is obtained, the touch area can be indirectly obtained. In the embodiment of the present disclosure, a requirement on accuracy of the size of the touch area is not so high, so that the indirect manner for obtaining the touch area is more convenient and faster than a method of directly calculating the touch area.

Step S710: the touch chip compares the obtained touch area with a preset area to judge whether the touch area exceeds the preset area or not.

Step S712: if the touch area is smaller than the preset area, effective touch signal scanning and capturing is continued; and if the touch area exceeds the preset area, a timer is started, and whether the touch exists all the time and the touch area keeps exceeding the preset area for a first preset time length are judged, wherein the first preset time length is mainly configured to control a duration of a touch action.

Step S714: if the touch stops or the touch area is smaller than the preset area within the first preset time length, effective touch signal scanning and capturing is re-performed; and if the touch exists all the time and the touch area keeps exceeding the preset area within the first preset time length, whether the touch has stopped or not is judged when a second preset time is exceeded.

Step S716: if the touch does not stop when the second preset time is exceeded, for example, if a user holds a mobile phone for a long time or the face of the user is attached to the touch screen for a long time during a conversation, effective touch signal scanning and capturing is re-performed; and if the touch has stopped when the second preset time is exceeded, the touch chip sends an interrupt signal to a power management component, wherein a pin, configured to send the interrupt signal, of the touch chip is connected with the power management component.

Step S718: the power management component gives a response to the interrupt signal sent by the touch chip, and performs corresponding processing according to the current state of the mobile terminal.

Step S720: in the standby state, the power management component sends a power-up control signal to a power component.

Step S722: the power component powers up the mobile terminal, and the mobile terminal enters the wakeup state from the standby state in response to the power-up control signal sent by the power management component.

Step S724: in the wakeup state, the power management component sends a power-down control signal to the power component.

Step S726: the power component powers down the mobile terminal, and the mobile terminal enters the standby state from the wakeup state in response to the power-down control signal sent by the power management component.

By the exemplary embodiment, switching of the terminal between the standby state and the wakeup state can be achieved by a touch of a large area (exceeding the preset area) without arranging an entity key on touch screen mobile terminal equipment, so that the requirement of the user can be better satisfied, and the user experience can be improved. Moreover, by the requirements that the touch area exceeds the preset area, the touch exists all the time within the first preset time length and the touch has stopped when the second preset time is exceeded and the measure that the sensitivity of the touch screen is reduced in the standby state, the problem of continuous switching of the terminal between the standby and wakeup states due to a mistaken touch can be effectively prevented, and the requirements are simple, feasible, consistent with a using habit of the user and higher in implementability.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein can form a single integrated circuit component for implementation. As a consequence, the present disclosure is not limited to any specific hardware and software combination.

The above is the exemplary embodiment of the present disclosure and not intended to limit the present disclosure. For those skilled in the art, the present disclosure may have various modifications and variations. Any modifications, equivalent replacements, improvements and the like made within the principle of the present disclosure shall fall within the scope of protection defined by the appended claims of the present disclosure.

## Claims

1. A method for switching a state of a terminal, comprising:
acquiring a touch signal from a touch screen;
determining a touch area corresponding to the touch signal according to the touch signal; and
switching the state of the terminal according to the touch signal under a condition that the touch area exceeds a set threshold value, wherein the state of the terminal is a standby state or a wakeup state.

2. The method as claimed in claim 1, wherein determining the touch area corresponding to the touch signal according to the touch signal comprises: determining the touch area according to the number of intersections of which capacitance variations exceed a configured threshold value among transverse and vertical line electrode intersections on the touch screen.

3. The method as claimed in claim 2, wherein switching the state of the terminal according to the touch signal under the condition that the touch area exceeds the set threshold value comprises:
starting a timer under the condition that the touch area is detected to exceed the set threshold value, and switching the state of the terminal when the touch area corresponding to the touch signal keeps exceeding the set threshold value for a first preset time length.

4. The method as claimed in claim 2, wherein switching the state of the terminal according to the touch signal under the condition that the touch area exceeds the set threshold value comprises:
starting the timer under the condition that the touch area is detected to exceed the set threshold value, and switching the state of the terminal when the touch area corresponding to the touch signal keeps exceeding the set threshold value for a first preset time length and a touch action corresponding to the touch signal stops within a second preset time length after the first preset time length.

5. The method as claimed in any one of claims 1 to 4, further comprising:
setting sensitivity and/or scanning frequency of the touch screen according to the state of the terminal, wherein a value of sensitivity and/or scanning frequency of the terminal in the standby state is lower than a value of sensitivity and/or scanning frequency of the terminal in the wakeup state.

6. A device for switching a state of a terminal, comprising:
an acquisition component, configured to acquire a touch signal from a touch screen;
a determination component, configured to determine a touch area corresponding to the touch signal according to the touch signal; and
a switching component, configured to switch the state of the terminal according to the touch signal under a condition that the touch area exceeds a set threshold value, wherein the state of the terminal is a standby state or a wakeup state.

7. The device as claimed in claim 6, wherein the determination component is configured to determine the touch area according to the number of intersections of which capacitance variations exceed a configured threshold value among transverse and vertical line electrode intersections on the touch screen.

8. The device as claimed in claim 7, wherein the switching component is configured to start a timer under the condition that the touch area is detected to exceed the set threshold value, and switch the state of the terminal when the touch area corresponding to the touch signal keeps exceeding the set threshold value for a first preset time length.

9. The device as claimed in claim 7, wherein the switching component is configured to start a timer under the condition that the touch area is detected to exceed the set threshold value, and switch the state of the terminal when the touch area corresponding to the touch signal keeps exceeding the set threshold value for a first preset time length and a touch action corresponding to the touch signal stops within a second preset time length after the first preset time length.

10. The device as claimed in any one of claims 6 to 9, further comprising:
a setting component, configured to set sensitivity and/or scanning frequency of the touch screen according to the state of the terminal, wherein a value of sensitivity and/or scanning frequency of the terminal in the standby state is lower than a value of sensitivity and/or scanning frequency of the terminal in the wakeup state.
